# EUROPEAN PATENT APPLICATION

(11) **EP 4 454 932 A1**
(43) Date of publication of application: **30.10.2024**
(21) Application number: 23170705.0
(22) Date of filing: 28.04.2023
(51) Int. Cl.: B60L 53/16, B60L 53/62, B60L 53/63

(54) **A METHOD AND SYSTEM FOR CHARGING TWO OR MORE ELECTRIC VEHICLES**

(71) Applicant: Wanja Kenya Group Ltd, London N1 7GU (GB)
(72) Inventor: KNIGHTON, Wanja, London, N1 7GU (GB); TYRRELL, Paul, Bicester, OX26 4LD (GB)
(74) Representative: Windsor, Louise

(57) **Abstract**

A system and method are provided for charging two electric vehicles. The system comprises: a first connection for interacting with a first electric vehicle to provide power and a first pilot line to the first electric vehicle; a second connection for interacting with a second electric vehicle to provide power and a second pilot line to the second electric vehicle; and a third connection for interacting with a charging system for receiving power and a third pilot line from the charging system. The system further comprises a control facility configured to: signal on the third pilot line to obtain power from the charging system; signal on the first pilot line to provide a controlled power supply to the first electric vehicle; and signal on the second pilot line to provide a controlled power supply to the second electric vehicle.

## Description

### Field

The present application relates to a method and system for charging two or more electric vehicles.

### Background

The following abbreviations may used in the description: AC=Alternating Current; DC=Direct current; PWM=Pulse Width Modulation; EV=electric vehicle; and LED=Light Emitting Diode.

With the growing number of EVs being purchased and employed for domestic use, the ability to charge such EVs at home is becoming a more complicated task. The electrical power provided by most utilities to a residential home typically allows only one 7kW single phase charger to be installed. Such a charger generally allows only a single EV to be charged (recharged) at a time. In addition, the user then has to physically disconnect the charged EV from the charger to allow another EV to be connected to the charger for charging.

There are drawbacks associated with this existing approach. For example, a user has to be physically present to change the charging connections at the appropriate time. Also, to avoid having to make repeated changes to the charging connections, typically a first EV is fully charged before charging is started for a second EV. However this means that the second EV is out of operation for the full time taken to charge the first EV.

In January 2021, there were 42,390 EV charging points in the UK (ZapMap) available for charging 477,000 EVs (a total of 790,000 including plug-in hybrids) on UK roads (https://www.smmt.co.uk). In 2020, there was a 74% growth in new registrations of pure-electric vehicles, and this trend is expected to accelerate fast with the ban of new petrol and diesel cars from 2030 and hybrid sales from 2035. Leeds (May 2022) has an average of 37.2 EVs per public charging point, and other cities are catching up - e.g. Belfast has 22.8EVs per charge point. Clearly, there are not enough chargers. Scottish Power has estimated the UK will need 25 million chargers to provide future support for all EVs at a cost of £300Bn.

WO2018115363 discloses an interface which is provided to be mounted as a pricing adapter between a domestic electric vehicle charging station (EVCS) and the charging cable of an electric vehicle. It is configured to control a charging process of a vehicle to be charged, the interface comprising: an inlet for connection to the domestic EVCS; one or more outlets configured for supplying electrical power to one or more vehicles; and a computing device configured to control a charging process through the supply of power from the inlet to the one or more outlets.

WO2019106114 provides an apparatus and system for directing power flow between multiple devices, the apparatus comprising: one or more inlet ports for connection to one or more devices; a plurality of outlet ports configured for supplying electrical power; and a computing device configured to route power from the one or more inlet ports to the outlet ports. The system comprises a plurality of the apparatus connected to each other.

The present application seeks to help address problems such as the domestic charging of multiple EVs at a single home.

### Summary

The invention is defined by the appended claims.

A system and method are provided for charging two or more electric vehicles.

The system comprises: a first connection for interacting with a first electric vehicle to provide power and a first pilot line to the first electric vehicle; a second connection for interacting with a second electric vehicle to provide power and a second pilot line to the second electric vehicle; and a third connection for interacting with a charging system for receiving power and a third pilot line from the charging system. The system further comprises a control facility configured to: signal on the third pilot line to obtain power from the charging system; signal on the first pilot line to provide a controlled power supply to the first electric vehicle; and signal on the second pilot line to provide a controlled power supply to the second electric vehicle.

In some implementations, the control facility is configured to: provide a controlled power supply to the first electric vehicle until the first electric vehicle has been charged; and subsequently switch to providing a controlled power supply to the second electric vehicle until the second electric vehicle has been charged. The switch between charging the first electric vehicle and charging the second electric vehicle may be performed without user intervention.

In some implementations, the control facility is configured to provide a controlled power supply to the first electric vehicle in parallel with providing a controlled power supply to the second electric vehicle. The control facility may be configured to split the power received from the charging system into first and second portions. The first portion of the received power may be provided to the first electric vehicle for charging the first electric vehicle and the second portion of the received power may be provided to the second electric vehicle for charging the second electric vehicle. In some cases, e.g. by a default setting, the first and second portions may be equal in size. In other cases, the control facility may be configured to receive a user input to determine the relative size of the first and second portions so as to prioritise between the first and second electric vehicles.

In some implementations, the control facility is configured to meter the power taken by the first electric vehicle and the power taken by the second electric vehicle. Typically, if the metered power taken by the first or second electric vehicle falls to a level below said first or second portion of the received power respectively provided by the control facility, the controlled power provided to the first or second electric vehicle respectively may be reduced to said metered level. In response to such a reduction in the controlled power provided to one of the first or second electric vehicle, the control facility may be configured to increase the controlled power provided to the other of the first or second electric vehicle (which would then allow quicker charging of the other of the first or second electric vehicle).

In some implementations, the control facility is configured to provide a controlled power to each of the first and second electric vehicles according to a duty cycle of a pulse width modulation applied to the first and second pilot lines respectively.

In some implementations, the third connection is configured to receive a single phase 7kW AC supply, although it will be appreciated that the details of the power supply received from a charging system may vary (for example) based on national standards.

In some implementations, the third connection comprises an IEC 62196 Type 2 connector and/or each of the first and second connections likewise comprises an IEC 62196 Type 2 connector. Again, it will be appreciated that the details of the connections may vary based (for example) on national standards.

In some implementations, the control facility is configured to adjust a power level on the third pilot line according to the following status: (i) +12V = No vehicle Present; (ii) +9V = Vehicle is now connected but is not requesting power to charge; (iii) +6V = Vehicle is connected and requesting power to charge its batteries. In some cases, the control facility is configured to: detect a power level on the first pilot line for the first connection according to the following status for the first electric vehicle: (i) +12V = No vehicle Present; (ii) +9V = Vehicle is now connected but is not requesting power to charge; (iii) +6V = Vehicle is connected and requesting power to charge its batteries. The control facility is further configured to detect a power level on the second pilot line for the second connection according to the following status for the second electric vehicle: (i) +12V = No vehicle Present; (ii) +9V = Vehicle is now connected but is not requesting power to charge; (ii) +6V = Vehicle is connected and requesting power to charge its batteries. The control facility may be configured to adjust the power level specified on the third pilot line to match the highest status received from the first or second electric vehicles based on the ordering (i) < (ii) < (iii).

In some implementations, the control facility is powered by electrical power taken from the third pilot line, so that the system does not have or include any battery or similar (thereby helping to limit cost and weight). Typically, the amount of electrical power taken from the third pilot line is sufficiently low that the charging system does not turn on its output relay. In other implementations, the power from the pilot line may be supplemented or replaced by electrical power taken from a battery provided in the system.

Although the above system has been described primarily as having two connections for receiving respective vehicles, in some cases, the system may have N connections for supplying charging power to N respective electric vehicles, wherein N ≥ 3.

In some implementations, the system is configured to connect to a dumb charging station over the third connection and to provide smart charging to one or more vehicles over the first and/or second connections.

In some implementations, an apparatus may comprise two or more of the above systems combined into a hierarchical network, whereby the apparatus has N connections for supplying charging power to N respective electric vehicles, wherein N ≥ 3.

In some implementations, an apparatus may comprise the combination of a charging system and a system for charging two or more electric vehicles as described herein.

The method provided herein comprises interacting via a first connection with a first electric vehicle to provide power and a first pilot line to the first electric vehicle, including signalling on the first pilot line to provide a controlled power supply to the first electric vehicle. The method further comprises interacting via a second connection with a second electric vehicle to provide power and a second pilot line to the second electric vehicle, including signalling on the second pilot line to provide a controlled power supply to the second electric vehicle. The method further comprises interacting via a third connection with a charging system for receiving power and a third pilot line from the charging system, including signalling on the third pilot line to obtain power from the charging system.

The method described herein may benefit from the same features as discussed above and below in relation to the system described herein.

### Brief Description of the Figures

Various implementations of the claimed invention are now described by way of example only with reference to the following drawings.
Figure 1 is a schematic diagram of a single electric vehicle connected to a charging system in a known manner.
Figure 2 is a schematic block diagram of two electric vehicles connected to a charging system using an example of a multiplug system as disclosed herein.
Figure 3 is a high-level flow-chart showing an example of the operations of a multiplug system as disclosed herein.
Figure 4 is a high-level flow-chart showing an example of the operations of the multiplug system in a multishare mode as disclosed herein.
Figure 5 is a schematic diagram showing an example of the internal components of the multiplug system as disclosed herein.

### Detailed Description

The approach described herein provides a one-to-many extension for an electric vehicle which may be retrofitted (if desired) to existing charging systems. Such a facility allows multiple EVs to connect to the existing charging system for automated charging in series and/or in parallel, for example while the driver performs some other task (working, shopping etc). Such an approach helps to reduce "charger anxiety" of EV drivers (as to whether they will find a place to recharge their EV) by in effect increasing the number of available charging outlets, but without involving roadworks or major new infrastructure. Accordingly, the present approach helps to remove various barriers to the wider adoption of EVs.

For example, in a domestic setting, UK households are increasingly being fitted with 7 kW home chargers to power the charging circuit of an electric vehicle. Most homes in the UK are single phase, which means you can only install 1 EV charger in a domestic (residential) setting. However, in the UK, over 35% of homes have 2 or more cars (https://www.specialistautomotivefinance.org.uk/resources/the-automotive-finance-market.html). At present a user may have to charge one electric vehicle using the single available EV charger and then subsequently charge a second electric vehicle, which is a relatively cumbersome and inconvenient approach.

As described herein, a multi-plug system (MPS) is provided to allow a single charge point (which may be pre-existing) to be connected to two or more electric vehicles. A control unit in the MPS manages the vehicle-to-charger connections to distribute the available power to the two or more electric vehicles. The MPS supports multiple modes of operation, including a split mode, in which two or more electric vehicles receive charging power at the same time, and a priority mode which supports greater configuration of the supplied levels of power. The MPS may further support all fast chargers (7-22 kW) as currently installed in the United Kingdom.

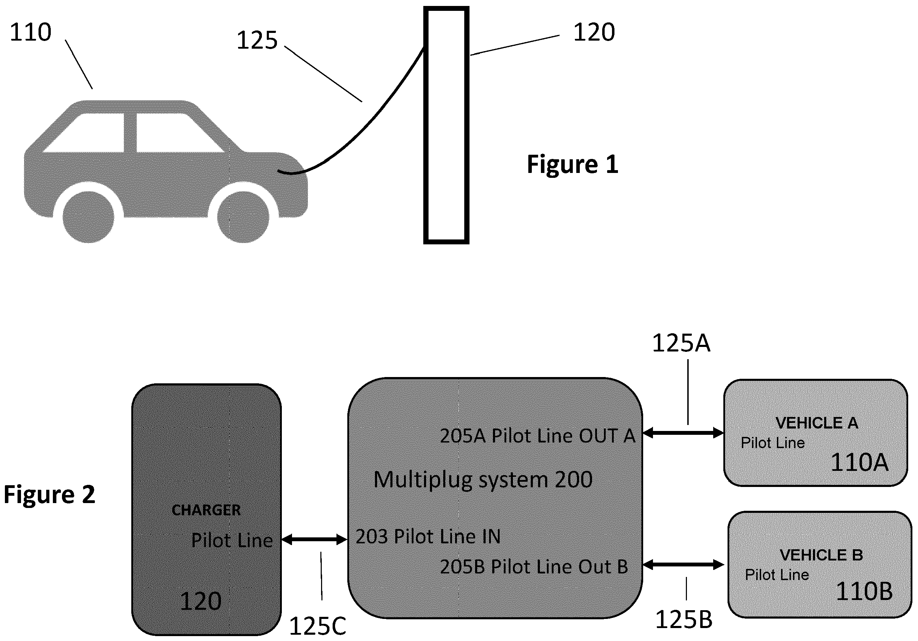

Figure 1 is a schematic diagram of an electrical vehicle 110 connected to a charging system 120 (also referred to as a charger or charging station) in a known manner by a cable (lead) 125. In a domestic or residential setting, the charging system 120 is generally able to output a single 7kW single phase supply for charging the electrical vehicle 110. The cable 125 incorporates multiple electrical connections between the charging system 120 and the electric vehicle 110, including for the supply of power from the charging system 120 to the electric vehicle 110. The cable 125 further includes a pilot line, also referred to as a control pilot (CP), which is a single wire used to provide a method of communication between the electric vehicle 110 and the charging system 120.

Further information about cable 125 can be found, for example, at:
1) https://en.wikipedia.org/wiki/Type_2_connector (for a standard European connector)
2) https://en.wikipedia.org/wiki/SAE_J1772 (for a standard north American connector)

In operation, the charging system 120 outputs a DC square wave signal of +12Vto -12V The vehicle manipulates the positive (+12V) portion of the signal to provide an appropriate one of the following three levels:
+12V = No vehicle Present
+9V = Vehicle is now connected but is not requesting power to charge
+6V = Vehicle is connected and requesting power to charge its batteries

The negative (-12V) portion of the signal is not affected or modified by the electric vehicle 110 but instead represents a safety measure to ensure the signal on the pilot line is being manipulated by a vehicle (rather than some other means such as a pool of water).

In order for the charging system 120 to inform the electric vehicle how much current the electric vehicle 110 can draw to charge its batteries, the charger adjusts the high period of the DC signal using pulse width modulation (PWM). In general, the period (and hence frequency) of the square wave remains the same during PWM, but time spent in the +12V portion of the signal is changed relative to the time spent in the -12V portion of the signal (the output might now be regarded in the general case as more of a rectangular wave than a square wave). In effect, the PWM is able to modify the duty cycle of the DC signal, where the duty cycle represents the proportion of time spent in the high (+12V) (on) condition. Accordingly, a signal in which the high (+12V) period is shorter in time than the low (-12V) period has a duty cycle < 0.5 and is used by the charging system 120 to indicate that the electric vehicle 110 is to draw a lower current level. Conversely, a signal in which the high (+12V) period is longer in time than the low (-12V) period has a duty cycle > 0.5 and is used by the charging system 120 to indicate that the electric vehicle 110 is able to draw a higher current level. The specific value of the duty cycle can be controlled to set a corresponding level of power to be supplied from the charging system 120.

The above approach has been designed to operate in the context shown in Figure 1, with a single electric vehicle 110 connected to the charging system 120. However, this approach does not extend to charging two or more vehicles at the same time.

Figure 2 is a schematic block diagram of two electric vehicles 110A, 110B connected to a charging system 120 using an example of a multiplug system (MPS) 200 as disclosed herein. For ease of explanation, the operation of the MPS will be described with reference to the presence of two electric vehicles 110A, 110B for charging. However, it should be understood that the approach described herein for supporting two electric vehicles 110A, 110B being charged from a single charging system 120 may be suitably extended to supporting the charging of three or more electric vehicles 110A, 110B from such a charging system 120. In practice, the number of electric vehicles 110 that may be attached to the MPS 200 may be limited by the number of ports or sockets available in the MPS 200 for connection to respective electric vehicles 110 (such as ports 205A, 205B in Figure 2 for connection to electric vehicles 110A, 110B respectively as described in more detail below).

In the configuration of Figure 2, the charging system 120 may be identical to the charging system 120 of Figure 1, and likewise the electric vehicle A 110A and the electric vehicle B 110B may both be identical to the vehicle 110 of Figure 1. In other words, the use of the MPS 200 has full backwards compatibility with existing charging systems 120 and existing electric vehicles 110. In effect, the presence of MPS 200 in the configuration of Figure 2 is transparent to the charging system 120 and to the vehicles 110A, 110B. As far as the charging system 120 is concerned, it is communicating and operating with a single electric vehicle. Similarly, as far as each electric vehicle 110A, 110B is concerned, that electric vehicle is communicating and operating directly with the charging system 120 (without the involvement of any other electric vehicles).

Thus with reference to Figure 2, the cable 125 from Figure 1 is now split into three separate cables, namely a first cable 125C extending between the charging system 120 and the MPS 200, a second cable 125A extending between the MPS 200 and electric vehicle 110A, and a third cable 125B extending between the MPS 200 and the electric vehicle 110B. Each of the first, second and third cables 125C, 125A and 125B may be identical to cable 125 in Figure 1. Accordingly, the use of MPS 200 has full backwards compatibility with existing charging cables 125.

Each of the cables 125C, 125A and 125B therefore provides multiple internal end-to-end electrical connections as discussed above for cable 125, including connections for the supply of power and also a pilot line. For present purposes, the focus will be mainly on the pilot lines included in each respective cable 125C, 125A and 125B, since the use of these pilot lines supports the charging of multiple electric vehicles 110A, 110B as described herein.

The socket provided in a vehicle 110 for receiving a cable 125A, B is different from the socket provided in the charging system 120 for receiving a cable 125C in the socket of the charger. This difference reflects a safety design to prevent users from connecting (daisy-chaining) multiple cables together. Connecting multiple cables in this manner might expose the risk of an electric shock if a cable were to be pulled out while charging.

Figure 2 shows the MPS 200 provided with a standard connector for receiving cable 125C, including a port 203 for a pilot line forming part of cable 125C. This pilot line received by port 203 will be referred to as an input pilot line. For communications on this input pilot line, the MPS in effect emulates an electric vehicle 110, so that it appears from the perspective of the charging system 120 that it is communicating directly with a single electric vehicle.

Figure 2 further shows the MPS 200 as provided with a standard connector for receiving cable 125A and with a standard connector for receiving the cable 125B. Each of the connectors for cables 125A, 125B includes a respective port 205A, 205B for a pilot line forming part of the cables 125A, 125B. The two pilot lines received by ports 205A and 205B respectively will be referred to as output pilot lines. For communications on these output pilot lines, the MPS in effect emulates a charging system, so that it appears from the perspective of each electric vehicle 110A, 110B that this electric vehicle (and no other) is communicating directly with the charging system 120.

The MPS 200 as described herein allows electric vehicles 110A, 110B to be charged at the same time. In this context, charging "at the same time" implies that the user connects up the charging system 120, the MPS 200, and the electric vehicles 110A, 110B, such as shown in Figure 2. When the user returns, both electric vehicles 110A, 110B have been charged (assuming the user allows enough time for the charging to complete). However, within this charging of both electric vehicles 110A, 110B by the MPS 200, there may be circumstances in which the charging current is provided first to one of the electric vehicles 110 and subsequently to the other of the electric vehicles 110 (a serial or series arrangement), while in other circumstances the charging current may be simultaneously provided to both of the electric vehicles 110 (a parallel arrangement). Some recharging operations performed by the MPS 200 may involve a mixture of both serial and parallel arrangements. Accordingly, from the perspective of the user, the use of MPS 200 allows both electric vehicles 110 to be charged without requiring further user intervention.

This is to be contrasted with the situation in Figure 1, in which if there are two cars to be charged, a user initially plugs cable 125 into the car 110 to be charged first. The user then has to return subsequently to disengage the cable 125 from the car that was charged first, and then connect the cable 125 up to the car that is to be charged second. This additional user intervention may be particularly unattractive for a user given that electric vehicles are frequently charged overnight, hence a user may have to perform the switchover between two electric vehicles in the middle of the night. The additional user intervention may also be unattractive of the user will be absent from the two vehicles during the charging procedure (such as away at work or shopping).

In order for the MPS 200 to support charging of two vehicles 110A, 110B together at the same time, the MPS is configured to monitor the signals received from the charging system 120 over port 203 and to monitor the signals received from the vehicles 110A, 110B over ports 205A and 205 respectively. In addition, the MPS 200 is configured to determine which output signals to send to the charging system 120 from port 203 and to send to the vehicles 110A, 110B from ports 205A and 205 respectively.

The following table summarises how the signal that the MPS 200 sends to the charging system 120 is determined based on the signals that the MPS 200 receives from the electric vehicles 110A, 110B (one signal from each vehicle). As described above, there are three possible return signals from each vehicle:
(i) +12V = No vehicle Present
(ii) +9V = Vehicle is now connected but is not requesting power to charge
(iii) +6V = Vehicle is connected and requesting power to charge its batteries

For a configuration of two electric vehicles 110A, 110B being charged, this then leads to a combination of 3x3=9 different signal combinations that the MPS 200 may receive from the two electric vehicles 110A, 110B, as illustrated in Table 1 below:

**Table 1**

| **Vehicle A** | **Vehicle B** | **Signal to Charger** |
|---|---|---|
| No Vehicle (12V) | No Vehicle (12V) | No Vehicle (12V) |
| No Vehicle (12V) | Vehicle Attached Not Charging (9V) | Vehicle Attached Not Charging (9V) |
| No Vehicle (12V) | Vehicle Attached Charging (6V) | Vehicle Attached Charging (6V) |
| Vehicle Attached Not Charging (9V) | No Vehicle (12V) | Vehicle Attached Not Charging (9V) |
| Vehicle Attached Not Charging (9V) | Vehicle Attached Not Charging (9V) | Vehicle Attached Not Charging (9V) |
| Vehicle Attached Not Charging (9V) | Vehicle Attached Charging (6V) | Vehicle Attached Charging (6V) |
| Vehicle Attached Charging (6V) | No Vehicle (12V) | Vehicle Attached Charging (6V) |
| Vehicle Attached Charging (6V) | Vehicle Attached Not Charging (9V) | Vehicle Attached Charging (6V) |
| Vehicle Attached Charging (6V) | Vehicle Attached Charging (6V) | Vehicle Attached Charging (6V) |

In the above table, the first column for Vehicle A indicates the signal that the MPS 200 receives on port 205A from vehicle 110A - the received signal being one of the three options (i)-(iii) specified above. The second column for Vehicle B indicates the signal that the MPS 200 receives on port 205B from vehicle 110B - the received signal again being one of the three options (i)-(iii) specified above. The final column for Signal to Charger indicates the signal that the MPS 200 forwards (returns) from port 203 back to the charging system 120. The return signal from port 203 to the charging system 120 is again one of the three options (i)-(iii) specified above.

The output relay of the charging system 120 is only energised by the MPS 200 when an electric vehicle is plugged into the MPS 200. In particular, if no such electrical vehicle 110 is plugged into the MPS 200, the MPS 200 returns a No Vehicle (12V) signal to the charging system 120, which does not lead to activation of the output relay of the charging system 120.

More generally, the logic for determining the return signal from the MPS 200 to the charging system 120 can be based on defining a hierarchy for the three options as followings: (iii) Vehicle Attached Charging (6V) > (ii) Vehicle Attached Not Charging (9V) > (i) No Vehicle (12V). At each stage, the MPS looks at the two signals received from vehicles 110A, 110B and returns whichever signal is highest in the above hierarchy. For example, if vehicle 110A returns option (ii), namely Vehicle Attached Not Charging (9V), while vehicle 110B returns option (i), namely No Vehicle (12V), the MPS 200 returns option (ii) from port 203 to the charging system 120, since option (ii) > option (i).

Note that this logic can be readily extended to a situation in which MPS 200 may potentially be used to charge more than two electric vehicles. For example, if there are three electric vehicles to be charged, the MPS looks at the three respective return signals received from the three electric vehicles, identifies the highest value according to the hierarchy specified above, and then returns this highest value over the pilot line to the charging system 120.

Likewise, the same logic can apply if the MPS 200 is being used, but only one electric vehicle is attached (say electric vehicle 110A). In this situation, the signal from the electric vehicle 110A is necessarily the highest in the hierarchy defined above (because there are no other options), and hence the MPS 200 returns the signal from electric vehicle 110A to the charging system 120. In this latter case, the MPS 200 is operating in effect as a simple pass-through device.

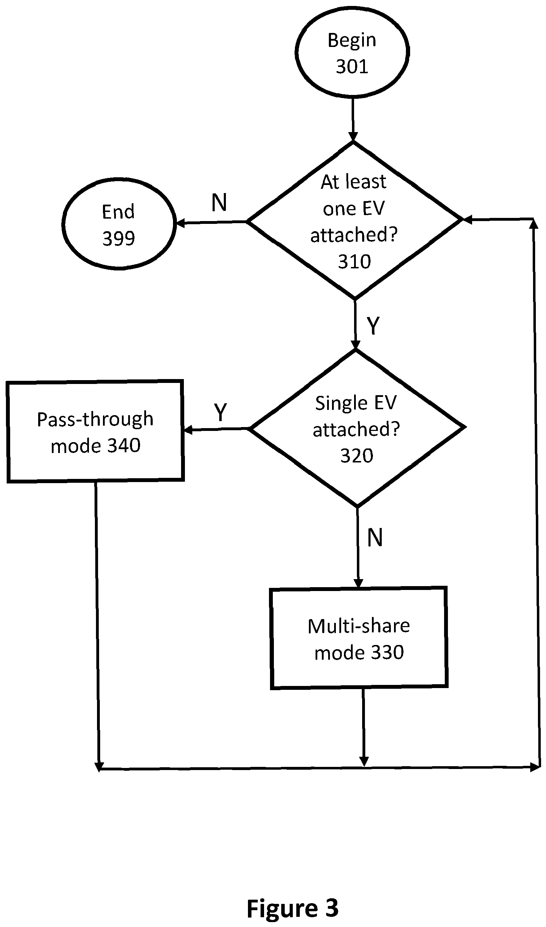

Figure 3 is a high-level flow-chart showing an example of the operations of the MPS 200 as disclosed herein. The operational flow begins at 301 and at operation 310 a determination is made by the MPS 200 as to whether at least one electric vehicle is connected for charging - if not, the operational flow terminates at operation 399. Further information is provided below on how the MPS 200 detects that an electric vehicle 110 is connected for charging.

Assuming that at least one electric vehicle 110 is connected to the MPS 200 for charging, we proceed to operation 320 to determine whether there is (i) one electric vehicle attached to the MPS 200 or (ii) more than one electric vehicle 110 attached to the MPS 200. In the former case, all of the current made available from the charging system 120 over cable 125C is forwarded this single electric vehicle via cable 125A, 125B as appropriate (according to which particular port the vehicle 110 to be recharged is connected). This operation 340 is referred to as pass-through mode since in this configuration the MPS 200 serves in effect as a conduit for charging current to pass from the charging system 120 to the single EV 110 for charging without the MPS 200 exerting further control functionality. Alternatively, if there are two or more electric vehicles 110 connected to the MPS 200, we proceed to operation 330 which is referred to as multi-share mode. In this mode, the MPS 200 distributes power from the charging system to the two or more electric vehicles as described below.

If an electric vehicle 110 is disconnected from the MPS 200 then we can return to operation 310 to determine the number of remaining electric vehicles 110 attached to the MPS. If there are no longer any EVs attached to the MPS 200, processing is terminated at operation 399; if there is one remaining EV attached to the MPS 200, we go to pass-through mode of operation 340; and if there are still multiple EVs attached to the MPS for charging, we return to the multi-share mode of operation 330.

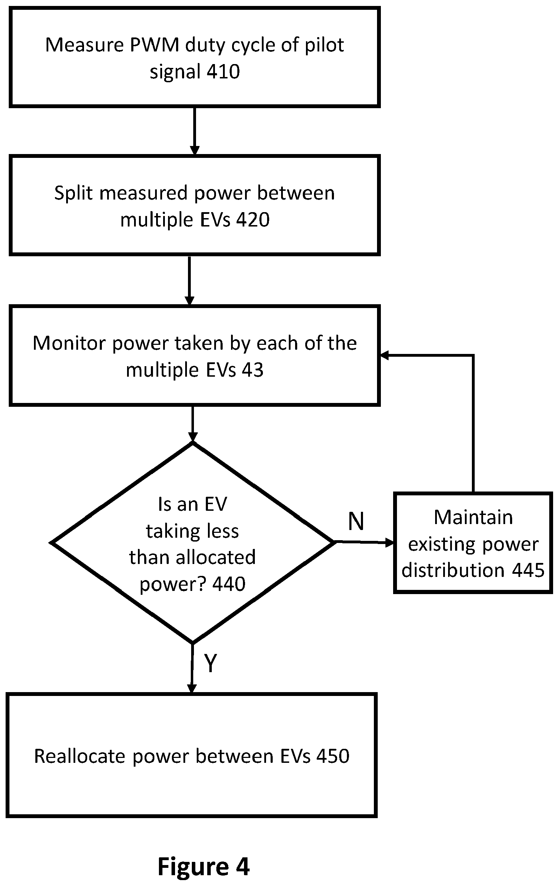

Figure 4 is a high-level flow-chart showing an example of the operations of the multiplug system in multi-share mode as disclosed herein. At operation 410, the MPS 200 measures the duty cycle of the PWM signal provided by the pilot line received from the charging system 120 (as described above) on port 203 to determine the maximum current that can be drawn from the charging system 120 for charging the attached electric vehicles 110. The MPS 200 then allocates this power to the attached electric vehicles 110 at operation 420. The power allocated to each of the attached vehicles is controlled by the MSP 200 in the sense that the MSP 200 sets the level for the allocated power.

Typically, the MPS 200 may provide an equal share of the available power to each of the attached electric vehicles, however, a different allocation scheme may be provided as discussed below. By way of example, if we assume that there are two electric vehicles 110A, 110B attached to the MPS 200 (as shown in Figure 2) and the available power from the charging system 120 is determined to be 6 kW, the MPS 200 may allocated a power of 3kW to each of the electric vehicles 110A, 110B. It will be appreciated that the sum of the power levels allocated to the electric vehicles 110 attached to the MPS 200 cannot exceed the power level available to the MPS 200 from the charging system 120.

In order to give effect to this distribution or allocation of power between the attached electrical vehicles 110, operation 420 further includes adjusting the out pilot line corresponding to each attached electric vehicle 110 to indicate the power available from the MPS 200 for that electric vehicle. For example, with reference again to the configuration of Figure 2, the MPS 200 adjusts the duty cycle of the pilot line provided with cable 125A from port 205A to vehicle 110A to indicate an available power (such as 3 kW) as allocated by the MPS 200. Likewise, the MPS 200 adjusts the duty cycle of the pilot line provided with cable 125B from port 205B to vehicle 110B to indicate an available power as allocated by the MPS 200.

At operation 430, the MPS 200 monitors the power (current) taken by each attached vehicle 110. For example, in the configuration of Figure 2, the power taken by vehicle 110A corresponds to the current drawn from the MPS 200 over cable 125A, while the power taken by vehicle 110B corresponds to the current drawn from the MPS 200 over cable 125B.

At operation 440, a test is made to see whether the monitored current draw to the attached vehicles 110 remains the same, or whether the current draw to at least one vehicle 110A has dropped below the allocated power level. In the former case, the power levels are maintained by the MPS 200 at the existing values at operation 445, and processing loops back to operation 430 to continue monitoring. In the latter case, we proceed to operation 450, and the MPS 200 may reduce the power level allocated to that electric vehicle, so that the allocated power reflects the lower level of power which is actually being drawn by that electric vehicle 110A. The power that was previously allocated to this electric vehicle 110A can now be reallocated to one or more other electric vehicles 110B which are being charged, thereby providing these one or more other electric vehicles 110B with additional charging power. Again, it will be appreciated that the total power provided from the MPS 200 to the two or more electric vehicles cannot exceed the overall power budget representing the power level provided to the MPS 200 over cable 125 C from the charging system 120.

The MPS 200 flags these new power allocations by changing the duty cycles on the pilot lines to the relevant electric vehicles. For example, the duty cycle on the pilot line from the MPS 200 to the electric vehicle 110A may be reduced to indicate the lower power level now available to electric vehicle 110A. Conversely, the duty cycle on the pilot line from the MPS 200 to the electric vehicle 110B may be increased to indicate the higher power level now available to electric vehicle 110B.

The MPS 200 continues to monitor the pilot lines returned by the respective vehicles 110 to determine when a vehicle 110 has finished charging. The MPS 200 may respond to such a termination within multi-share mode by reallocating the power previously supplied to this vehicle. If there is now only one remaining vehicle being charged, the MPS 200 may now transition to pass-through mode as illustrated in the flowchart of Figure 3. If there are no remaining vehicles being charged, the MPS 200 may conclude the charging operation.

As mentioned above, there may be an equal allocation (split) by the MPS 200 of power from the charging system 120 to the attached electric vehicles. This may be referred to as split-level charging. However, the MPS 200 may have other modes of operation. For example, in priority mode of charging, the MPS may select one vehicle as a priority for receiving power from the MPS 200. The priority vehicle may receive a larger share (potentially all) of the available power from the charging system 120. For example, in the configuration of Figure 2, and assuming again that the charging system 120 can provide 6kW, then split-level charging would provide 3kW to each of electric vehicles 110A and 110B. However, if the MPS 200 performs priority mode charging, with electric vehicle 110A identified as the priority vehicle, electric vehicle 110A might receive (say) 4kW and electric vehicle 110B may receive only the remaining 2kW.

In some implementations, the MPS 200 may allow a user to specify the particular share of available power to be allocated to each of the two or more vehicles being charged. In other implementations, the MPS 200 may have more restricted support for priority charging - for example, a user may be able to select a vehicle to be the priority compared with the other vehicle(s) being recharged. The MPS 200 might then be configured to provide the electric vehicle indicated as the priority with a 50% higher level of power compared to the power received by the other electric vehicle(s). For example, in the context of Figure 2, with electric vehicle 110A indicated as priority and a 6kW supply as above, the electric vehicle 110A would receive 3.6 kW and electric vehicle 110B would receive 2.4 kW. It will be appreciated that the power uplift of 50% for the priority vehicle compared to the other vehicle(s) is an example only, and other implementations might have an uplift of (say) 25%, 75% or 100%. In some implementations, the uplift may be fixed (predefined) within the MPS 200, while in other implementations the user may be able to configure the uplift to match their own preferences.

There are various reasons for wanting to use the priority mode, rather than the equal allocation of the split-level mode. For example:
*the priority vehicle might have a lower remaining charge on its battery;
*the priority vehicle might have a larger battery to re-charge
*the priority vehicle will be needed sooner than any other vehicle
*the priority vehicle is expected to travel further over the next day or so compared to any other vehicle.

The various allocation modes and strategies described above for use by the MPS 200 to distribute power to connected vehicles, as well as the motivation and rationale thereof, are provided by way of illustration and without limitation. The skilled person will be aware of further allocation modes for use by MPS 200.

In general, operation of the MPS 200 may be powered by power taken from the charging system 120. In particular, with regard to the power used by the MPS 200 for control operations (rather than the current for charging the connected vehicles), it has been found a small amount of power can be drawn from the pilot line on the charger without causing the charger to think a car has been connected and turning on the power output relay. This power can be extracted from the pilot line arriving at port 203 of MPS 200. As mentioned above, the output relay of the charging system 120 is only energised when an electric vehicle 110 is plugged into one of the out ports 205A, 205B of the MPS 200.

The use of the power from the pilot line in this manner for controlling operation of the MPS 200 avoids having to provide the MPS 200 with its own power supply, such as an internal (rechargeable) battery or separate mains connection. However, the MPS 200 may be provided with its own supply, for example if the MPS 200 is relatively larger with relatively higher power requirements. For example, in some implementations, the MPS may be provided with wireless connectivity (such as Bluetooth or NFC) to connect to an app to provide remote control and setting of the MPS 200 (such as for a user to specify the priority share for each attached electric vehicle). It will be appreciated that such additional functionality in the MPS 200 may be easier to support with an internal power supply such as a battery - for example, a user might want to activate the MPS 200 to re-configure the MPS 200 even if no electric vehicle 110 is presently connected to the MPS 200.

There are various ways of providing cable 125C between the charging system 120 and the MPS 200 and likewise of providing cables 125A, 125B between the MPS 200 and a vehicle 110 for charging. Thus the charging system 120 may provide socket into which the cable 125C may be plugged (and then unplugged) - this is referred to as an untethered configuration. Alternatively, the cable 125C may be permanently fixed (tethered) to the charging system 120. In this case, the charging system 120 may be provided with some facility for storing the tethered cable, for example, a spindle around which the cable 125C can be wrapped when not in use. It will be appreciated that the selection of a tethered or untethered output from the charging system 120 is typically made at the installation of the charging system 120 and may be independent of the use of MPS 200 (if such use might not have been planned or contemplated when the charging system 120 was first installed).

There may also be an untethered or tethered connection at the MPS 200 between the cable 125C and port 203, whereby an untethered connection allows cable 125C to be disconnected from port 203, whereas a tethered connection provides a permanent connection between the cable 125C and the port 203. Accordingly, cable 125C could be tethered at neither end, at one end (the charging system 120 or the MPS 200), or at both ends. For present purposes, cable 125C is regarded as fully tethered if it is tethered at both ends, i.e. to the charging system 120 and also to port 203 of the MPS 200, and fully untethered if is untethered at both ends.

A domestic user might prefer cable 125C to be fully untethered - this allows the cable 125C to be disconnected from the charging system 120 and MPS 200 for carrying around in a vehicle 110, for example to use the cable 125C in a different recharging system at another location. Conversely a small business might allow a customer to use a charging system 120 while visiting the business premises for some other purpose (shopping, a hair-cut, etc). In this latter situation, the use of a (fully) tethered cable 125C may be attractive so that the user cannot drive away with the cable 125C (or with the MPS 200)

Likewise, the cables 125A, 125B may be untethered or may be tethered to the MPS 200. In some cases, the configuration may vary between the ports. For example, the cable 125A may be tethered at port 205A, but cable 125B may not be tethered to port 205B (this configuration might be provided to allow one cable, namely cable 125B, to be available for taking with an electric vehicle, but to ensure at least one cable, namely cable 125A, is always available for use in charging from the MPS 200).

The functionality provided by the MPS 200 is impacted according to whether or not the cable 125C between the charging system 120 and port 203 is fully tethered. Thus in a fully tethered configuration for cable 125C, the MPS 200 is in constant receipt of power (and a signal) over the pilot line from the charging system 120 and hence can be regarded as in an 'always on' mode of operation. In this case, the response provided by the MPS 200 over the pilot line to the charging system depends on the connection and charging status of the electric vehicles 110A, 110B.

In contrast, if the cable 125C is not fully tethered, the MPS 200 may be unpowered unless and until the cable is 125C is connected to both the charging system 120 and the port 203 (assuming the MPS 200 is not provided with an additional internal power supply). Thus when the cable 125C is not fully tethered, the MPS 200 functionality is configured to 'wake up' based on receipt of the pilot line when the cable 125C has been connected to both the charging system 120 at one end and the MPS 200 at the other end. The functionality of the MPS 200 is less impacted by the particular form of attachment (tethered or untethered) for cables 125A, 125B.

If the MPS 200 is provided with a socket for connection to the charging system 120 using port 203, or for connection to a vehicle via port 205A or 205B, the same general mode of operation is followed. The pilot line is monitored for an indication that an electric vehicle has been attached, and if so, the proximity line (another portion of a Type 2 connector) is measured for an indication of the rating of the cable 125 that has been attached, whereby each cable 125 includes a built-in resistor to indicate a maximum power rating for the cable 125. The socket of the MPS 200 is then set to lock the inserted cable in place to prevent removal during charging. Once the pilot line has indicated that an electric vehicle 110 is no longer attached to the MPS 200, the socket lock of the MPS 200 is then reset to allow removal of the inserted cable 125A, 125B.

The MPS 200 takes a small amount of electrical power from the pilot line of the charging system 120 in order to run the electronics inside the MPS 200, but without causing the charging system 120 to turn on its output relay. The small amount of power now feeding MPS 200 enables the MPS 200 to sample the pilot lines from electric vehicles 110A, 110B to determine whether or not they are connected to the MPS 200.

The MPS 200 includes two identical charging circuits, one charging circuit 125A associated with port 205A, and the other charging circuit 125B associated with port 205B. The MPS 200 interacts with the charging system 120 to cause the charging system to provide power to the MPS 200; this supplied power comprises a single phase AC supply.

The MPS 200 decides how this power from the charging circuit 120 is to be allocated (distributed) across the two attached vehicles 110A, 110B (for the configuration shown in Figure 2). In some cases the two attached vehicles 110A, 110B are provided simultaneously with power in a parallel arrangement, although the two attached vehicles 110A, 110B may not receive identical shares of the power received (available) from the charging system 120. For example, in some cases, a user may select to provide a higher proportion of the available power to (say) vehicle 110A and to provide a lower proportion of the available power to electric vehicle 110B.

In an alternative configuration, the MPS 200 may charge two electric vehicles 110A, 110B in series (but without requiring user intervention between charging the first electric vehicle and then charging the second electric vehicle). In some cases, this use of series charging may be specifically requested by a user, for example, because it may be a priority to have the first vehicle charged and ready to operate.

In other cases, the MPS 200 may be limited to series (sequential) charging, in that the MPS 200 may have only a single charging circuit. The power from this charging circuit may be directed initially to a first electric vehicle and then subsequently to a second electric vehicle using an appropriate switching facility. Although this form of MPS 200 has less functionality, it is also cheaper, in that the MPS 200 only has one charging circuit rather than two charging circuits. However, such an MPS 200 still has two sockets (such as port 205A, 205B) to allow the first and second electric vehicles 110A, 110B to both be attached to the MPS 200 at the same time, thereby supporting sequential charging of the first and second electric vehicles without having to switch a cable from one electric vehicle to another electric vehicle (or any other form of user intervention).

The MPS 200 further includes a metering circuit associated with each charging circuit to monitor the amount of current being drawn by the electric vehicle 110 connected to that charging circuit. The metering circuit allows the MPS 200 to detect a reduction in the level of power (current) drawn by the electric vehicle 110. The detection of such a reduction in the level of power taken by an electric vehicle 110 being charged may indicated that the electric vehicle is nearly completely charged. Alternatively, there may be some other reason why the electric vehicle is taking less power than allocated by the MPS 200 - for example, the electric vehicle may monitor the temperature of the batteries being charged, and reduce the level of current provided for the charging if the monitored temperature exceeds a threshold temperature. In response to a given reduction in the level of charging power taken by a first electric vehicle, the MPS 200 may provide an increased level of charging power to another (second) vehicle, where the increase in power level for the second electric vehicle may correspond to the reduction in power level for the first electric vehicle.

The above description has focussed on core aspects of the use of MPS 200 for charging electric vehicles 110, however, there are a number of ancillary issues to be considered. These ancillary issues can generally be handled in a similar manner to existing systems, and so will not be discussed in detail, since the skilled person is already familiar with such issues in the general context of charging electric vehicles.

In some implementations, the charging system 120 may require a PIN or ID card to be presented to start a charge sequence and/or to terminate a charge sequence. If this is the case, the user can present the relevant authentication to the charging system 120 to allow the charging to commence (or to terminate).

In some implementations, the charging system 120 may be configured to only provide power for charging at set times. Typically, this restriction might be used to limit charging to overnight, for example because a cheaper tariff may be available for night-time compared with day-time. Again, it will be understood that the MPS 200 may be operated to comply with such restricted charging times.

As mentioned above, the MPS 200 shown in Figure 2 has connections to receive two electric vehicles 110A, 110B, but other implementations of the MPS may have more connections to receive additional electric vehicles. An alternative (or additional) approach would be to form a network of MPS 200 devices. For example, the configuration of Figure 2 might be modified so that the electric vehicles 110A, 110B are replaced by additional MPS 200 devices, say MPS 200A and MPS 200B, each having a pair of connections for receiving two electric vehicles (analogous to the configuration of MPS 200 in Figure 2). This network of MPS devices 200, 200A, 200B would operate based on similar principles to those discussed above, but would support charging of four electric vehicles 110, namely two connected to MPS device 200A and two connected to MPS device 200B.

From one perspective, the MPS 200 described herein may be regarded as a form of extension cable for an EV charging system 120 that creates multiple outputs (a one-to-many connection). The MPS 200 may be retrofitted onto existing EV charging systems 120 without requiring road works. The cost of installing MPS 200 to work with an existing EV charging system 120 may be as low as 10-20% of the cost of a new EV charging system (with associated roadworks). Using ISO15118 EV-to-charger communications, the MPS 200 is able to distribute charging power to multiple EVs. In some implementations, the EVs to be charged form a queue (series); in other cases, the multiple EVs may be charged in parallel. (A combination of series and parallel charging may also be utilised).

The MPS 200 may be used for example in premises such as domestic houses, flats, etc, which have a charging system 120 that is limited at present to one EV, but where multiple EVs may be located (by residents, visitors, and so on). Adding a second charging system to the premises would generally require expensive electric works (or may not be available at all in some cases). With MPS 200, a single charging system 120 can be installed, and multiple electric vehicles may then be charged (throughout the night or day).

In some cases, the premises may be a car park, where drivers leave their car for a long time, such as a Park & Ride facility or a train station, shopping centre, place of work, and so on. An existing charging system may provide rapid charging of an EV, for example within 45 minutes; however, after this period, the EV would have finished charging, but would still occupy the recharging system for the rest of the day and so prevent use by other electric vehicles. Installing multiple fast charging systems to address this would be expensive and risk high demand from the electric utility grid. However, with MPS 200, a single rapid charging system 120 is able to charge multiple electric vehicles in succession, thereby significantly increasing utilisation of the recharging system 120 while keeping installation costs low.

The MPS 200 may also be beneficial for depot or fleet managers who want to charge multiple vehicles overnight, for example EV taxi companies. Rather than charging all electric vehicles manually (i.e. with user intervention), MPS 200 allows vehicles 110 to be automatically queued and charged as needed. Furthermore, the MPS 200 may provide multiple charging head formats (CHAdeMO, GB.T, CCS etc), thus increasing the availability of a charging system 120 to a wider range of users. The electric vehicles being charged by the MPS 200 are not limited to cars, but may extend to other forms of electric vehicles, such as scooters, bicycles, wheelchairs, buggies, delivery vans, buses, and so on.

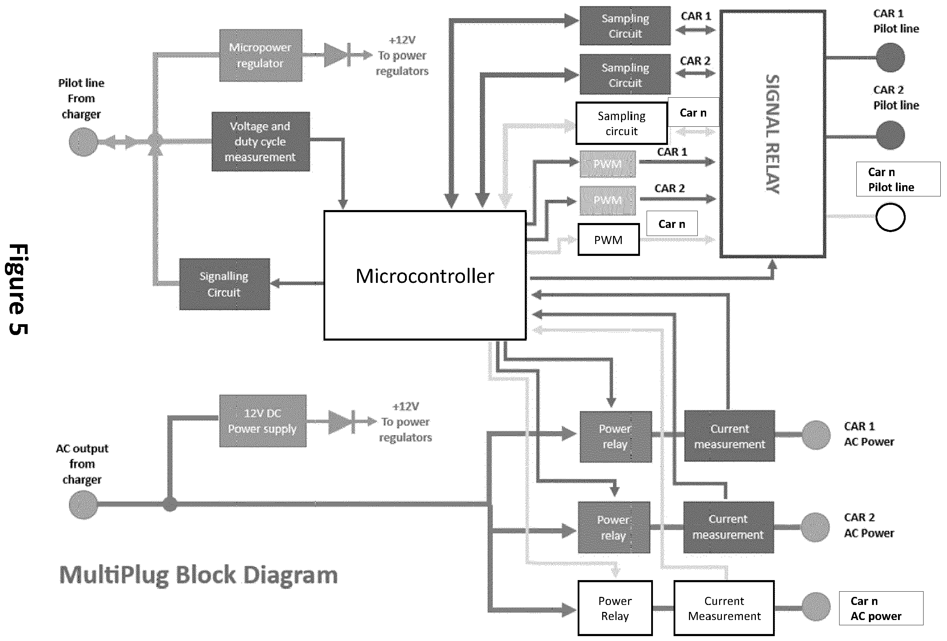

Figure 5 is a schematic diagram showing an example of the internal components of the multiplug system 200 as disclosed herein. The left-hand portion of this diagram reflects the interface of the multiplug system 200 with a charging device 120 (such as shown in Figure 2). This interface includes a port (terminal) for receiving a pilot line from the charging device 120, analogous to the terminal 203 for receiving pilot line 125C as shown in Figure 2. The interface includes a further port or terminal for receiving AC power from the charger 120 over a power cable (this port and power cable are not shown in Figure 2).

The line from the pilot terminal and the line from the power cable terminal are both tapped to provide power for supporting the internal operations of the multiplug system 200 via suitable power regulators. It will be appreciated that a power cable terminal can supply a higher level of power to the multiplug system 200 than the pilot line, however in some cases there may not be a connected power cable, so in this case the pilot line may be the only available external source of electrical power.

As discussed above, the pilot signal from the charger 120 may comprise a DC square wave signal of +12V to -12V. The vehicle manipulates the positive (+12V) portion of the signal to return an appropriate one of the following three levels over the pilot line 125C: +12V = No vehicle Present, +9V = Vehicle is now connected but is not requesting power to charge, and +6V = Vehicle is connected and requesting power to charge its batteries. This voltage can be imposed on the pilot line via the signalling circuit under the control of the microcontroller.

Also as discussed above, the charging system 120 uses a PWM signal over the pilot line 125C to indicate to the multiplug system 200 how much electrical current is available for charging a car battery (from the perspective of the charging system 120 there is just a single EV for charging; the presence of the multiplug system 200 to support charging of potentially multiple EVs is generally transparent to the charging system 120). The input (left) side of Figure 5 shows a unit to measure the voltage and duty cycle of the PWM for the incoming pilot signal 125C, and this information is then passed to the microcontroller for managing the operations of the multiplug system 200.

The right-hand portion of Figure 5 generally shows the output side of a multiplug system 200 which supports charging of at least two electrical vehicles, such as vehicles 110A, 110B as shown in Figure 2. Figure 5 further includes facilities to charge "car n" - it will be understood that this indicates providing support for up to "n" cars (generally where n≥2). An AC power output is provided for each car that is supported, and this power output is supplied from the input AC power (received from the charger 120) via a respective power relay. Each AC power output is also equipped with a current measurement device. Such measurement device may be used to detect whether a vehicle is drawing less than its allocated share of electrical power, in which case that power may be reallocated by the microcontroller for charging another vehicle (such as described above in relation to the flowchart of Figure 4).

The output side of the multiplug system 200 further contains facilities for interacting with vehicles being charged by the multiplug system 200. On this output side, the multiplug system 200 acts in effect as a set of chargers (one for each connected vehicle 110). For each output terminal which connects to a respective vehicle by a pilot line (such as 125A and 125B as shown Figure 2), the microcontroller sets the PWM duty cycle accordingly, having regard to the amount of power being received from the charging system 120 and the number of cars connected to the multiplug system 200 for recharging. Each output terminal is further linked to a sampling circuit, which performs an analog-to-digital conversion to provide the microcontroller with information received as part of the (analog) pilot signal.

It will be appreciated that the circuit configuration of Figure 5 is provided by way of example only, and other configurations will be apparent as appropriate to the skilled person. For example, rather than having a single microcontroller, the multiplug system 200 may utilise a number of different processing circuits for performing different functionality. Furthermore, the multiplug system 200 may include facilities not shown in Figure 5. For example, a light may be provided to indicate that the connection to the charging system is active, and/or a light may be provided to confirm an active connection for each respective vehicle output connection.

A further potential use of the multiplug system 200 is to convert a dumb charging station into a smart charging station - see https://wallbox.com/en_uk/faqs-what-is-smart-charging for more details about smart charging. In some cases, such a smart charging station may be implemented by updating the software running in the multiplug system 200, in particular to provide additional functionality to the microcontroller. In other cases, the hardware of the multiplug system may also be supplemented, for example, with one or more additional network communications facilities to support reporting charging activity and status to the owner of the dumb charging station, to the owner of the EV and so on. The communications facility may provide access to the Internet by any suitable service, such as a wireless LAN available at the charging station and/or a mobile telephone data connection (such as 3G or 4G data etc). It will be appreciated that in this context, the multiplug system 200 may potentially have only single output connection, i.e. for connectivity to one electronic vehicle. In this case the multiplug system 200 would operate as an intermediary between a dumb charging system and a single vehicle to provide smart charging. In other cases, the multiplug system 200 may operate as an intermediary between a dumb charging system and multiple vehicles (as described above) to provide smart charging of these multiple vehicles.

Accordingly, various implementations and examples have been disclosed herein. It will be appreciated that these implementations and examples are not intended to be exhaustive, and the skilled person will be aware of potential variations and modifications of these implementations and examples that fall within the scope of the present disclosure. Certain implementations may comprise any appropriate combination of the features disclosed herein without limitation to the particular combinations provided by the claims. It will also be understood that features of particular implementations and examples can typically be incorporated into other implementations and examples (unless the context clearly indicates to the contrary). In summary, the various implementations and examples herein are disclosed by way of illustration rather than by way of limitation and the scope of the present case should be determined from the appended claims and their equivalents.

## Claims

1. A system for charging two electric vehicles, the system comprising:
a first connection for interacting with a first electric vehicle to provide power and a first pilot line to the first electric vehicle;
a second connection for interacting with a second electric vehicle to provide power and a second pilot line to the second electric vehicle; and
a third connection for interacting with a charging system for receiving power and a third pilot line from the charging system;
the system further comprising a control facility configured to:
signal on the third pilot line to obtain power from the charging system;
signal on the first pilot line to provide a controlled power supply to the first electric vehicle; and
signal on the second pilot line to provide a controlled power supply to the second electric vehicle.

2. The system of claim 1, wherein the control facility is configured to:
provide a controlled power supply to the first electric vehicle until the first electric vehicle has been charged;
and subsequently switch to provide a controlled power supply to the second electric vehicle until the second electric vehicle has been charged;
and optionally wherein said switch is performed without user intervention.

3. The system of claim 1 or 2, wherein the control facility is configured to provide a controlled power supply to the first electric vehicle in parallel with providing a controlled power supply to the second electric vehicle.

4. The system of claim 3, wherein the control facility is configured to split the power received from the charging system into first and second portions, and to provide the first portion of the received power to the first electric vehicle for charging the first electric vehicle and to provide the second portion of the received power to the second electric vehicle for charging the second electric vehicle; optionally wherein the first and second portions are equal in size.

5. The system of claim 4, wherein the control facility is configured to receive a user input to determine the relative size of the first and second portions so as to prioritise between the first and second electric vehicles.

6. The system of any of claims 3 to 5, wherein the control facility is configured to meter the power taken by the first electric vehicle and the power taken by the second electric vehicle.

7. The system of claim 6, wherein:
if the metered power taken by one of the first or second electric vehicles falls to a level below said first or second portion respectively of the received power provided by the control facility, the control facility is configured to reduce the controlled power provided to said one of the first or second electric vehicles respectively to said metered level; and optionally where in response to reducing the controlled power provided to one of the first or second electric vehicles, the control facility is configured to increase the controlled power provided to the other of the first or second electric vehicles.

8. The system of any of claims 3 to 7, wherein the control facility is configured to provide a controlled power to each of the first and second electric vehicles according to a duty cycle of a pulse width modulation applied to the first and second pilot lines respectively.

9. The system of any preceding claim, wherein the third connection is configured to receive a single phase 7kWAC supply; and/or wherein the third connection comprises an IEC 62196 (ISO15118) Type 2 connector and/or wherein each of the first and second connections comprises an IEC 62196 (ISO15118) Type 2 connector.

10. The system of any preceding claim, wherein the control facility is configured to adjust a power level on the third pilot line according to the following status: (i) +12V = No vehicle Present; (ii) +9V = Vehicle is now connected but is not requesting power to charge; (iii) +6V = Vehicle is connected and requesting power to charge its batteries;
and optionally wherein the control facility is configured to:
detect a power level on the first pilot line for the first connection according to the following status for the first electric vehicle: (i) +12V = No vehicle Present; (ii) +9V = Vehicle is now connected but is not requesting power to charge; (iii) +6V = Vehicle is connected and requesting power to charge its batteries; and
detect a power level on the second pilot line for the second connection according to the following status for the second electric vehicle: (i) +12V = No vehicle Present; (ii) +9V = Vehicle is now connected but is not requesting power to charge; (ii) +6V = Vehicle is connected and requesting power to charge its batteries;
wherein the control facility is configured to adjust the power level specified on the third pilot line to match the highest status received from the first or second electric vehicles based on the ordering (i) < (ii) < (iii).

11. The system of any preceding claim, wherein the control facility is powered by electrical power taken from the third pilot line, and optionally wherein the amount of electrical power taken from the third pilot line is sufficiently low that the charging system does not turn on the output relay of the charging system.

12. The system of any preceding claim, wherein the system has N connections for supplying charging power to N respective electric vehicles, wherein N ≥ 3;
and/or wherein the system is configured to connect to a dumb charging station over the third connection and to provide smart charging to one or more vehicles over the first and/or second connections.

13. An apparatus comprising a hierarchical network of two or more systems of any preceding claim, wherein the apparatus has N connections for supplying charging power to N respective electric vehicles, wherein N ≥ 3.

14. An apparatus comprising the combination of a charging system and a system as described in any of claims 1 to 12.

15. A method for charging two electric vehicles, the method comprising:
interacting via a first connection with a first electric vehicle to provide power and a first pilot line to the first electric vehicle, including signalling on the first pilot line to provide a controlled power supply to the first electric vehicle;
interacting via a second connection with a second electric vehicle to provide power and a second pilot line to the second electric vehicle, including signalling on the second pilot line to provide a controlled power supply to the second electric vehicle; and
interacting via a third connection with a charging system to receive power and a third pilot line from the charging system, including signalling on the third pilot line to obtain power from the charging system.
